(19)

Europäisches Patentamt

European Patent Office

Office européen des brevets

(11)  **EP 4 425 686 A1**

(12)  **EUROPEAN PATENT APPLICATION**
published in accordance with Art. 153(4) EPC

(43) Date of publication:
**04.09.2024  Bulletin 2024/36**

(21) Application number: **21961942.6**

(22) Date of filing: **29.10.2021**

(51) International Patent Classification (IPC):
**H01M 50/533** (2021.01)    **H05K 9/00** (2006.01)

(52) Cooperative Patent Classification (CPC):
**Y02E 60/10; Y02P 70/50**

(86) International application number:
**PCT/CN2021/127691**

(87) International publication number:
**WO 2023/070590 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventors:
• SU, Shiwei
 **Ningde City, Fujian Province 352100 (CN)**
• DENG, Daolin
 **Ningde City, Fujian Province 352100 (CN)**
• YANG, Xingfu
 **Ningde City, Fujian Province 352100 (CN)**
• CHEN, Wen
 **Ningde City, Fujian Province 352100 (CN)**

(74) Representative: **Icosa**
**83 avenue Denfert-Rochereau**
**75014 Paris (FR)**

(54)  **ELECTROCHEMICAL APPARATUS AND ELECTRIC DEVICE**

(57)  This application relates to the field of energy storage technologies, and particularly discloses an electrochemical apparatus and an electric device including the electrochemical apparatus. The electrochemical apparatus includes a housing, an electrode assembly, a first tab, a first connecting member, a second tab, and a second connecting member. The housing includes a top wall, a side wall, and a bottom wall, the top wall being provided with a first electrode. The electrode assembly includes a first electrode plate and a second electrode plate. The first tab is connected to the first electrode plate and the first electrode, and the first connecting member is connected to the first electrode. The second tab is connected to the second electrode plate and the housing, and the second connecting member is connected to the housing. When the electrochemical apparatus is in a charging/discharging state, a magnetic field generated by the first tab and a magnetic field generated by the first connecting member can at least partially cancel each other out, and a magnetic field generated by the second tab and a magnetic field generated by the second connecting member can at least partially cancel each other out, so that a magnetic field generated by the electrochemical apparatus is weakened, reducing electromagnetic interference of the electrochemical apparatus to an electric device.

100

FIG. 1

**Description**

**TECHNICAL FIELD**

This application relates to the field of energy storage technologies, and particularly to an electrochemical apparatus and an electric device.

**BACKGROUND**

Button cells are widely used in Bluetooth headsets, but the noise floor generated by the magnetic field of the button cell itself can affect the sound effect of the Bluetooth headset, thus compromising user experience.

**SUMMARY**

In view of the above situation, it is necessary to provide an electrochemical apparatus to reduce electromagnetic interference to an electric device.

According to a first aspect of this application, an electrochemical apparatus is provided. The electrochemical apparatus includes a housing and an electrode assembly accommodated in the housing. The housing includes a top wall, a side wall, and a bottom wall, the top wall being provided with a first electrode. The electrode assembly includes a first electrode plate and a second electrode plate. The electrochemical apparatus satisfies at least one of the following conditions (i) or (ii): (i) the electrochemical apparatus further includes a first tab and a first connecting member disposed outside the housing; the first tab is connected to the first electrode plate and the first electrode, and the first tab includes a first connecting zone connected to the first electrode plate; and the first connecting member is connected to the first electrode; where when viewed in a direction perpendicular to the top wall, a connecting line between a geometric center of the first connecting zone and a geometric center of the first electrode is a first reference line, and with the geometric center of the first electrode as the center of a circle and a length L1 of a line segment between the geometric center of the first connecting zone and the geometric center of the first electrode as a radius, a $\pm 45°$ sector region on both sides of the first reference line is denoted as a first region, an area of the first connecting member is denoted as S1, and an area of an overlap between the first connecting member and the first region is denoted as S2, satisfying: $S2/S1 \geq 50\%$; or (ii) the electrochemical apparatus further includes a second tab and a second connecting member disposed outside the housing; the second tab is connected to the second electrode plate and the housing, and the second tab includes a second connecting zone connected to the second electrode plate and a third connecting zone connected to the housing; and the second connecting member is connected to the housing; where when viewed in a direction perpendicular to the bottom wall, a connecting line between a geometric center of the second connecting zone and a geometric center of the third connecting zone is a second reference line, and with the geometric center of the third connecting zone as the center of a circle and a length L2 of a line segment between the geometric center of the second connecting zone and the geometric center of the third connecting zone as a radius, a $\pm 45°$ sector region on both sides of the second reference line is denoted as a second region, an area of the second connecting member is denoted as S3, and an area of an overlap between the second connecting member and the second region is denoted as S4, satisfying: $S4/S3 \geq 50\%$. When the electrochemical apparatus is in a charging/discharging state, a magnetic field generated by the first tab and a magnetic field generated by the first connecting member can at least partially cancel each other out, and/or a magnetic field generated by the second tab and a magnetic field generated by the second connecting member can at least partially cancel each other out, so that a magnetic field generated at an end face of the electrochemical apparatus is weakened. As compared with other values of S2/S1 and/or S4/S3, when $S2/S1 \geq 50\%$ and/or $S4/S3 \geq 50\%$, the magnetic field at the end face of the electrochemical apparatus is weak and causes less electromagnetic interference to an electric device.

In some embodiments of this application, the electrochemical apparatus further satisfies at least one of the following conditions (iii) or (iv): (iii) $S2/S1 \geq 70\%$; or (iv) $S4/S3 \geq 70\%$. When $S2/S1 \geq 70\%$ and/or $S4/S3 \geq 70\%$, the magnetic field generated at the end face of the electrochemical apparatus is smaller, and the difference in magnetic field strength at various positions of the end face is small.

In some embodiments of this application, the electrochemical apparatus further satisfies at least one of the following conditions (v) or (vi): (v) a fourth connecting zone is provided at an end portion of the first connecting member away from the first electrode, where when viewed in a direction perpendicular to the top wall, an included angle between a connecting line between a geometric center of the fourth connecting zone and the geometric center of the first electrode and a connecting line between the geometric center of the first connecting zone and the geometric center of the first electrode is denoted as $\theta$, satisfying: $0° \leq \theta \leq 45°$; or (vi) a fifth connecting zone is provided at an end portion of the second connecting member away from the third connecting zone, where when viewed in a direction perpendicular to the bottom wall, an included angle between a connecting line between a geometric center of the fifth connecting zone and the geometric center of the third connecting zone and a connecting line between the geometric center of the second connecting zone and the geometric center of the third connecting zone is denoted as β, satisfying: $0° \leq \beta \leq 45°$.

As compared with $\theta > 45°$, when $\theta \leq 45°$, the magnetic field generated by the first tab and the magnetic field generated by the first connecting member cancel each other out better, and the electrochemical apparatus has better electromagnetic characteristics. As compared with $\beta > 45°$, when $\beta \leq 45°$, the magnetic field generated by the second tab and the magnetic field generated by the second connecting member cancel each other out better, and the electrochemical apparatus has better electromagnetic characteristics.

In some embodiments of this application, a fourth connecting zone is provided at an end portion of the first connecting member away from the first electrode. When viewed in a direction perpendicular to the top wall, a connecting line between a geometric center of the fourth connecting zone and the geometric center of the first electrode is a third reference line, and with the geometric center of the first electrode as the center of a circle and a length L3 of a line segment between the geometric center of the fourth connecting zone and the geometric center of the first electrode as a radius, a ±45° sector region on both sides of the third reference line is denoted as a third region, and an area of an overlap between the second connecting member and the third region is denoted as S5, satisfying: $S5/S3 \geq 50\%$. When the electrochemical apparatus is in a charging/discharging state, the magnetic field generated by the first connecting member and the magnetic field generated by the second connecting member can at least partially cancel each other out, so that a magnetic field generated by the entire electrochemical apparatus is weakened. As compared with $S5/S3 < 50\%$, when $S5/S3 \geq 50\%$, the magnetic field generated by the first connecting member and the magnetic field generated by the second connecting member cancel each other out better, and the electrochemical apparatus has better electromagnetic characteristics.

In some embodiments of this application, a ratio of the area S5 to the area S3 satisfies: $S5/S3 \geq 85\%$. When $S5/S3 \geq 85\%$, the magnetic field generated by the first connecting member and the magnetic field generated by the second connecting member cancel each other out better, and the difference in magnetic field strength at various positions of the end face is small.

In some embodiments of this application, when viewed in the direction perpendicular to the top wall, an included angle between the first reference line and the second reference line is denoted as α, satisfying: $0° \leq \alpha \leq 60°$. As compared with $\alpha > 60°$, when $0° \leq \alpha \leq 60°$, the magnetic field generated by the first tab and the magnetic field generated by the second tab cancel each other out better, and a magnetic field generated by the entire electrochemical apparatus is smaller.

In some embodiments of this application, the electrode assembly is a wound structure. The first electrode plate includes a first active material layer, the first active material layer includes a first end portion, and the first end portion is disposed at a winding start end of the wound structure. The second electrode plate includes a second active material layer, the second active material layer includes a second end portion, and the second end portion is disposed at the winding start end of the wound structure. Along a length direction of the first electrode plate, a distance between the geometric center of the first connecting zone and the first end portion is denoted as D1; and along a length direction of the second electrode plate, a distance between the geometric center of the second connecting zone and the second end portion is denoted as D2, satisfying: $0.5 \leq D1/D2 \leq 2$. As compared with other values of D1/D2, when $0.5 \leq D1/D2 \leq 2$, a magnetic field generated by the first electrode plate and a magnetic field generated by the second electrode plate cancel each other out better, and the magnetic field generated by the electrochemical apparatus has smaller impact on the electric device. Further, when $0.9 \leq D1/D2 \leq 1.1$, the magnetic field generated by the first electrode plate and the magnetic field generated by the second electrode plate cancel each other out better, and the difference in magnetic field strength at various positions of the end face of the electrochemical apparatus is small.

In some embodiments of this application, the electrochemical apparatus further satisfies at least one of the following conditions (a) or (b): (a) a fourth connecting zone is provided at an end portion of the first connecting member away from the first electrode, where when viewed in a direction perpendicular to the top wall, a length of a line segment between a geometric center of a fourth connecting zone and the geometric center of the first electrode is denoted as L3, satisfying: $0.5 \leq L1/L3 \leq 2$; or (b) a fifth connecting zone is provided at an end portion of the second connecting member away from the third connecting zone, where when viewed in a direction perpendicular to the bottom wall, a length of a line segment between a geometric center of the fifth connecting zone and the geometric center of the third connecting zone is denoted as L4, satisfying: $0.5 \leq L2/L4 \leq 2$.

As compared with other values of L1/L3, when $0.5 \leq L1/L3 \leq 2$, the magnetic field generated by the first tab and the magnetic field generated by the first connecting member cancel each other out better, and the difference in magnetic field strength at various positions on the top wall side of the electrochemical apparatus is smaller. As compared with other values of L2/L4, when $0.5 \leq L2/L4 \leq 2$, the magnetic field generated by the second tab and the magnetic field generated by the second connecting member cancel each other out better, and the difference in magnetic field strength at various positions on the bottom wall side of the electrochemical apparatus is smaller.

In some embodiments of this application, the electrochemical apparatus further satisfies at least one of the following conditions (1) to (4): (1) the first tab and the second tab are located on opposite sides of the electrode assembly; (2) the top wall has a first surface and a second surface opposite each other, the top wall is provided with a through hole penetrating through the first surface and the second surface, and the first electrode is disposed in the through hole; (3) an insulator is provided between the top wall and the first electrode; or (4) the housing includes a metal material.

According to a second aspect of this application, an electric device is further provided, the electric device including the electrochemical apparatus according to any one of the foregoing embodiments. The electrochemical apparatus can weaken the magnetic field generated by itself, has good electromagnetic characteristics, and reduces the impact of its own magnetic field on the electric device.

**BRIEF DESCRIPTION OF DRAWINGS**

FIG. 1 is a first view of an electrochemical apparatus according to an embodiment of this application.
FIG. 2 is a second view of an electrochemical apparatus according to an embodiment of this application.
FIG. 3 is a partial cross-sectional view of an electrochemical apparatus according to an embodiment of this application.
FIG. 4 is a schematic structural diagram of a first electrode according to an embodiment of this application.
FIG. 5 is a first view of an electrode assembly, a first tab, and a second tab according to an embodiment of this application.
FIG. 6 is a second view of an electrode assembly, a first tab, and a second tab according to an embodiment of this application.
FIG. 7 is a third view of an electrochemical apparatus according to an embodiment of this application.
FIG. 8 is a third view of an electrode assembly, a first tab, and a second tab according to an embodiment of this application.
FIG. 9 is a fourth view of an electrochemical apparatus according to another embodiment of this application.
FIG. 10 is a fifth view of an electrochemical apparatus according to an embodiment of this application.
FIG. 11 is a sixth view of an electrochemical apparatus according to an embodiment of this application.
FIG. 12 is a schematic structural diagram of an electric device according to an embodiment of this application.

Reference signs of main components

| | |
|---|---|
| Electrochemical apparatus | 100 |
| Housing | 1 |
| Top wall | 11 |
| First electrode | 111 |
| First portion | 1111 |
| Third surface | 1111a |
| Second portion | 1112 |
| First surface | 112 |
| Second surface | 113 |
| Through hole | 114 |
| Side wall | 12 |
| Bottom wall | 13 |
| Conductive portion | 131 |
| Cavity space | 14 |
| Electrode assembly | 2 |
| First electrode plate | 21 |
| First active material layer | 211 |
| First end portion | 2111 |
| Second electrode plate | 22 |
| Second active material layer | 221 |
| Second end portion | 2211 |
| Separator | 23 |
| First tab | 3 |
| First connecting zone | 31 |
| Second tab | 4 |
| Second connecting zone | 41 |
| Third connecting zone | 42 |

(continued)

| | |
|---|---|
| First connecting member | 5 |
| Fourth connecting zone | 51 |
| Second connecting member | 6 |
| Fifth connecting zone | 61 |
| Insulator | 7 |
| Connecting line between geometric center of fourth connecting zone and geometric center of first electrode | W1 |
| Connecting line between geometric center of first connecting zone and geometric center of first electrode | W2 |
| Connecting line between geometric center of fifth connecting zone and geometric center of third connecting zone | W3 |
| Connecting line between geometric center of second connecting zone and geometric center of third connecting zone | W4 |
| Length of line segment between geometric center of first connecting zone and geometric center of first electrode | L1 |
| Length of line segment between geometric center of second connecting zone and geometric center of third connecting zone | L2 |
| Length of line segment between geometric center of fourth connecting zone and geometric center of first electrode | L3 |
| Length of line segment between geometric center of fifth connecting zone and geometric center of third connecting zone | L4 |
| First region | A1 |
| Second region | A2 |
| Third region | A3 |
| Electric device | 200 |
| Device body | 210 |
| First direction | X |
| Second direction | Y |
| Third direction | Z |

This application will be further described with reference to the accompanying drawings in the following specific embodiments.

## DESCRIPTION OF EMBODIMENTS

The following describes the technical solutions in some embodiments of this application with reference to the accompanying drawings in these embodiments of this application. Apparently, the described embodiments are only some rather than all of the embodiments of this application.

It should be noted that when one component is assumed as being "connected to" another component, it may be connected to the another component directly or with a component possibly present therebetween. When a component is deemed as being "disposed" on another component, it may be directly disposed on the another component, or there may be a component disposed in between.

Unless otherwise defined, all technical and scientific terms used herein shall have the same meanings as commonly understood by those skilled in the art to which this application pertains. The terms used in the specification of this application are intended to merely describe the specific embodiments rather than to limit this application.

According to a first aspect of this application, an electrochemical apparatus is provided, including a housing and an electrode assembly accommodated in the housing. The housing includes a top wall, a side wall, and a bottom wall, the top wall being provided with a first electrode. The electrode assembly includes a first electrode plate and a second electrode plate. The electrochemical apparatus satisfies at least one of the following conditions (i) or (ii): (i) the electrochemical apparatus further includes a first tab and a first connecting member disposed outside the housing; the first tab is connected to the first electrode plate and the first electrode, and the first tab includes a first connecting zone connected to the first electrode plate; and the first connecting member is connected to the first electrode; where when viewed in a direction perpendicular to the top wall, a connecting line between a geometric center of the first connecting zone and a geometric center of the first electrode is a first reference line, and with the geometric center of the first electrode as the center of a circle and a length L1 of a line segment between the geometric center of the first connecting zone and the geometric center of the first electrode as a radius, a ±45° sector region on both sides of the first reference line is denoted as a first region, an area of the first connecting member is denoted as S1, and an area of an overlap between the first connecting member and the first region is denoted as S2, satisfying: S2/S1 ≥ 50%; or (ii) the electrochemical apparatus further includes a second tab and a second connecting member disposed outside the housing; the second tab is connected to the second electrode plate and the housing, and the second tab includes a second connecting zone connected to the second electrode plate and a third connecting zone connected to the housing; and the second connecting member is connected to the housing; where when viewed in a direction perpendicular to the bottom wall, a connecting line between a geometric center of the second connecting zone and a geometric center of the third connecting zone is a second reference line, and with the geometric center of the third connecting zone as the center of a circle and a length L2 of a line segment between the geometric center of the second connecting zone and the geometric center of the third connecting zone as a radius, a ±45° sector region on both sides of the second reference line is denoted as a second region, an area of the second connecting member is denoted as S3, and an area of an overlap between the second connecting member and the second region is denoted as S4, satisfying: S4/S3 ≥ 50%. When the electrochemical apparatus is in a charging/discharging state, a magnetic field generated by the first tab and a magnetic field generated by the first connecting member can at least partially cancel each other out, and/or a magnetic field generated by the second tab and a magnetic field generated by the second connecting member can at least partially cancel each other out, so that a magnetic field generated at an end face of the electrochemical apparatus is weakened. As compared with other values of S2/S1 and/or S4/S3, when S2/S1 ≥ 50% and/or S4/S3 ≥ 50%, the magnetic field at the end face of the electrochemical apparatus is weak and causes less electromagnetic interference to an electric device.

In an example, further description will be made with an example in which the electrochemical apparatus is placed on the horizontal plane, with the bottom wall at the bottom and the top wall at the top.

The following further describes some embodiments of this application with reference to the accompanying drawings.

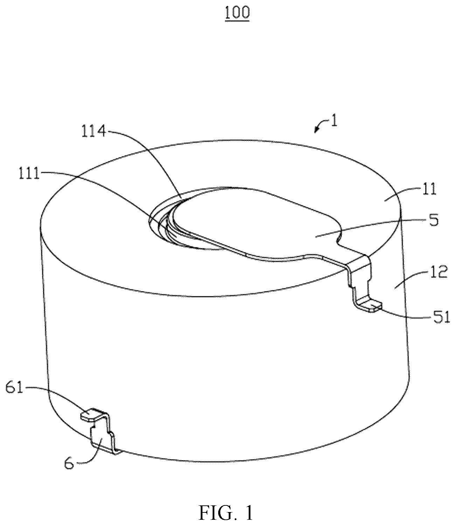

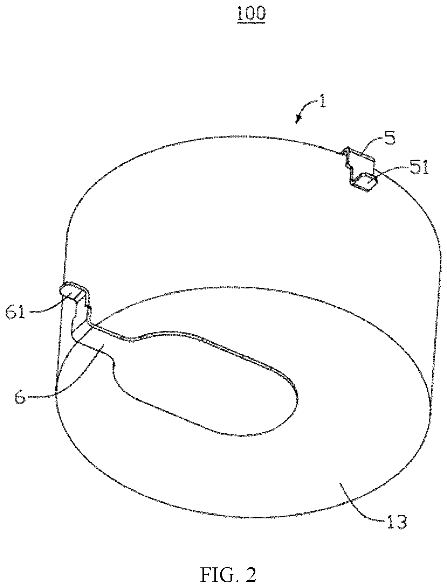

As shown in FIG. 1, FIG. 2, and FIG. 3, an embodiment of this application provides an electrochemical apparatus 100. The electrochemical apparatus 100 includes a housing 1, an electrode assembly 2, a first tab 3, a second tab 4, a first connecting member 5, and a second connecting member 6. The electrode assembly 2, the first tab 3, and the second tab 4 are disposed inside the housing 1, and the electrode assembly 2 connects the first tab 3 and the second tab 4. The first connecting member 5 and the second connecting member 6 are disposed outside the housing 1, the first connecting member 5 is electrically connected to the first tab 3, and the second connecting member 6 is electrically connected to the second tab 4. The first connecting member 5 and the second connecting member 6 can be used to connect an external electric device, so that the electrochemical apparatus 100 can supply power to the electric device.

The housing 1 includes a top wall 11, a side wall 12, and a bottom wall 13. The top wall 11, the side wall 12, and the bottom wall 13 enclose a cavity space 14, and the electrode assembly 2, the first tab 3, and the second tab 4 are disposed in the cavity space 14.

The top wall 11 is provided with a first electrode 111. The first electrode 111 connects the first tab 3 and the first connecting member 5.

In an embodiment, the top wall 11 is provided with a through hole 114 and includes a first surface 112 and a second surface 113 facing away from each other. The through hole 114 penetrates through the first surface 112 and the second surface 113. The first surface 112 is located on a side of the top wall 11 facing the cavity space 14, and the second surface 113 is located on a side of the top wall 11 facing away from the cavity space 14.

At least part of the first electrode 111 is disposed in the through hole 114. In an embodiment, the electrochemical apparatus 100 further includes an insulator 7. The insulator 7 is disposed between the top wall 11 and the first electrode 111. The insulator 7 connects the top wall 11 and the first electrode 111 and insulates the top wall 11 from the first electrode 111, reducing the risk of short circuit in the electrochemical apparatus 100.

In an embodiment, the material of the first electrode 111 includes but is not limited to aluminum or copper metal.

In an embodiment, the bottom wall 13 includes a conductive portion 131. The conductive portion 131 connects the second tab 4 and the second connecting member 6 so that the second tab 4 is electrically connected to the second connecting member 6. In an embodiment, the conductive portion 131 includes a metal material.

In an embodiment, the first connecting member 5 includes a metal material. In an embodiment, the second connecting member 6 includes a metal material.

In other embodiments, the first electrode 111 may alternatively be disposed in the through hole 114 (not shown in the figure), and the insulator 7 is disposed between the first electrode 111 and the inner wall of the through hole 114.

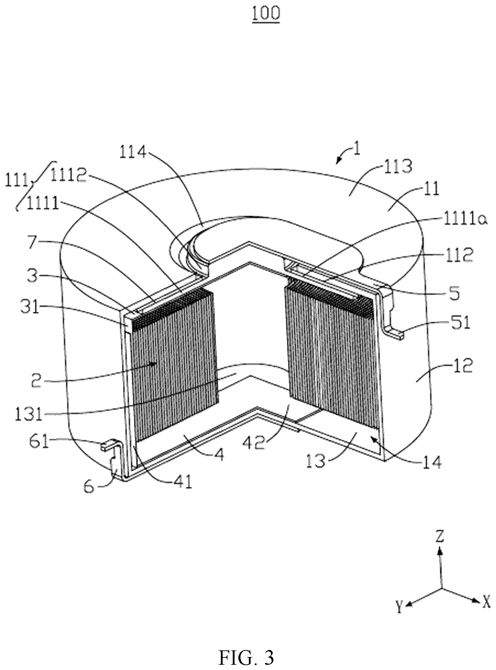

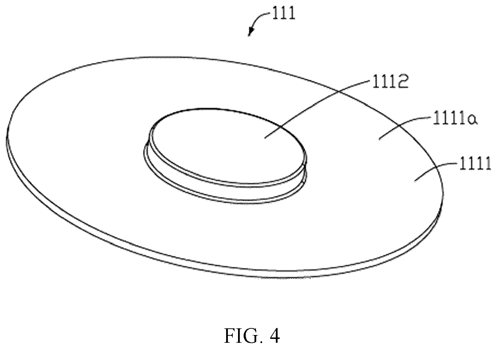

As shown in FIG. 3 and FIG. 4, the first electrode 111 includes a first portion 1111 and a second portion 1112. The first portion 1111 has a third surface 1111a, and the second portion 1112 protrudes from the third surface 1111a. The first portion 1111 is disposed in the cavity space 14, and the second portion 1112 is in the through hole 114.

For ease of understanding and description, further description will be made below with an example in which a direction perpendicular to the top wall 11 is a third direction Z; and when viewed in the third direction Z, a length direction of the first connecting member 5 is a first direction X, and a length direction of the second connecting member 6 is a second direction Y.

In an embodiment, the insulator 7 has a ring structure, and the second portion 1112 of the first electrode 111 passes through the ring structure.

In an embodiment, the insulator 7 includes but is not limited to sealant.

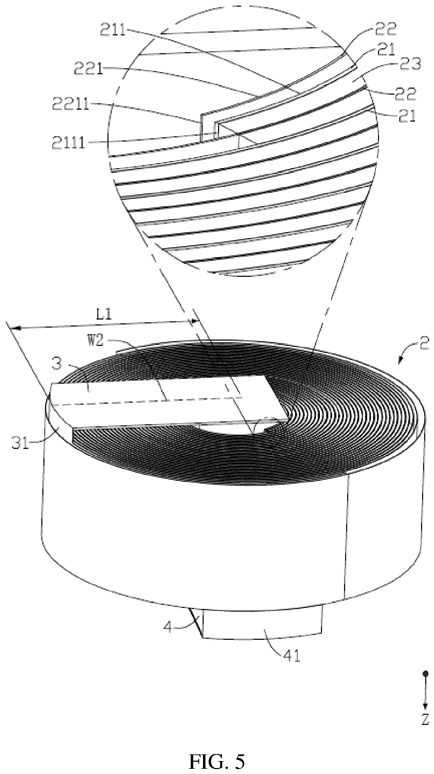

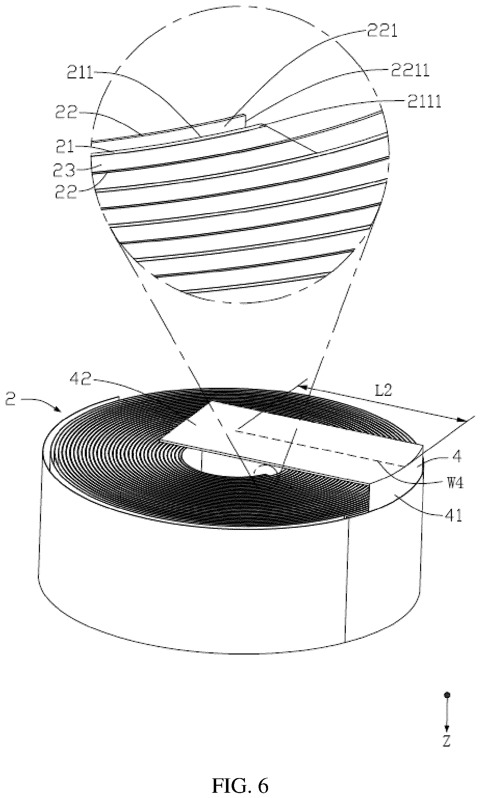

As shown in FIG. 5 and FIG. 6, the electrode assembly 2 includes a first electrode plate 21, a second electrode plate 22, and a separator 23, and the separator 23 is disposed between the first electrode plate 21 and the second electrode plate 22. In an embodiment, the first electrode plate 21, the separator 23, and the second electrode plate 22 are wound together.

One of the first electrode plate 21 and the second electrode plate 22 is a positive electrode plate and the other is a negative electrode plate.

One of the first tab 3 and the second tab 4 is a positive electrode tab and the other is a negative electrode tab.

The first electrode plate 21 includes a first active material layer 211, the first tab 3 has a first connecting zone 31, and the first tab 3 is connected to the first electrode plate 21 at the first connecting zone 31.

The second electrode plate 22 includes a second active material layer 221, the second tab 4 has a second connecting zone 41, and the second tab 4 is connected to the second electrode plate 22 at the second connecting zone 41.

In an embodiment, the first tab 3 is located on a side of the electrode assembly 2, and the second tab 4 is located on the opposite side of the electrode assembly 2. In other embodiments, the first tab 3 and the second tab 4 may alternatively be located on a same side of the electrode assembly 2 (not shown in the figure).

The electrode assembly 2 is a wound structure. In an embodiment, the first active material layer 211 includes a first end portion 2111, and the first end portion 2111 is disposed at a winding start end of the wound structure; and the second active material layer 221 includes a second end portion 2211, and the second end portion 2211 is disposed at the winding start end of the wound structure.

Along a length direction of the first electrode plate 21, a distance between a geometric center of the first connecting zone 31 and the first end portion 2111 is denoted as D1. Along a length direction of the second electrode plate 22, a distance between a geometric center of the second connecting zone 41 and the second end portion 2211 is denoted as D2 Optionally, $0.5 \leq D1/D2 \leq 2$.

When the electrochemical apparatus 100 is in a charging/discharging state, a current direction between the first end portion 2111 and the first connecting zone 31 is opposite to a current direction between the second end portion 2211 and the second connecting zone 41, and magnetic fields generated by opposite currents in the first electrode plate 21 and the second electrode plate 22 can at least partially cancel each other out, thereby reducing the impact of a magnetic field generated by the electrochemical apparatus 100 on the electric device.

Further optionally, $0.9 \leq D1/D2 \leq 1.1$. When $0.9 \leq D1/D2 \leq 1.1$, the magnetic field generated by the first electrode plate 21 and the magnetic field generated by the second electrode plate 22 cancel each other out better, and the difference in magnetic field strength at various positions of the end face of the electrochemical apparatus 100 is small.

Referring to FIG. 1, FIG. 2, and FIG. 3, the second tab 4 further has a third connecting zone 42, and the second tab 4 is connected to the conductive portion 131 of the bottom wall 13 at the third connecting zone 42.

A fourth connecting zone 51 is provided at an end portion of the first connecting member 5 away from the first electrode 111, and a fifth connecting zone 61 is provided at an end portion of the second connecting member 6 away from the third connecting zone 42. The fourth connecting zone 51 and the fifth connecting zone 61 can be used to connect an external electric device, so that the electrochemical apparatus 100 can be electrically connected to the electric device.

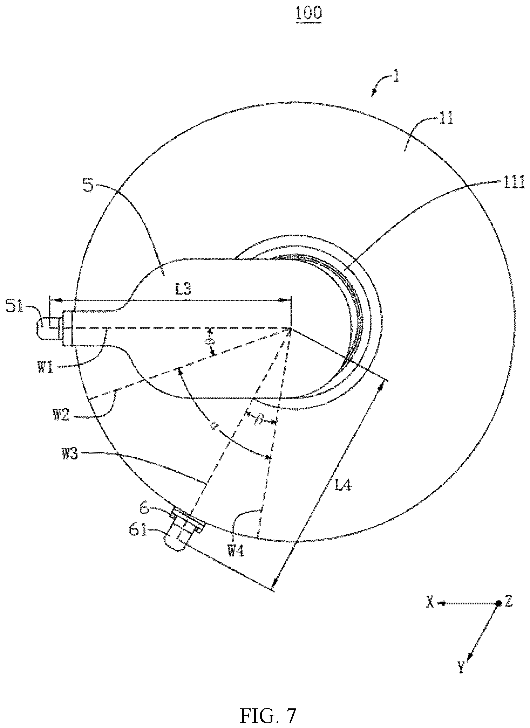

Referring to FIG. 5, FIG. 6, and FIG. 7, when viewed in the third direction Z, a connecting line between a geometric center of the fourth connecting zone 51 and the geometric center of the first electrode 111 is denoted as W1, a connecting line between the geometric center of the first connecting zone 31 and the geometric center of the first electrode 111 is denoted as W2, and an included angle between the connecting line W1 and the connecting line W2 is denoted as $\theta$.

In this application, $\theta$ is the included angle between a ray passing through the geometric center of the fourth connecting zone 51 and a ray passing through the geometric center of the first connecting zone 31 when viewed in the third direction Z, with the geometric center of the first electrode 111 as an endpoint.

In an embodiment, $0° \leq \theta \leq 45°$. When the electrochemical apparatus 100 is in a charging/discharging state, when viewed in the third direction Z, currents tend to flow in opposite directions on the first tab 3 and the first connecting member 5, and the magnetic field generated by the first tab 3 and the magnetic field generated by the first connecting member 5 can at least partially cancel each other out, so that the magnetic field generated on the side of the top wall 11 of the electrochemical apparatus 100 is weakened, thereby reducing the impact of the magnetic field generated by the electrochemical apparatus 100 on the electric device. As compared with $\theta > 45°$, when $\theta \leq 45°$, the magnetic field generated by the first tab 3 and the magnetic field generated by the first connecting member 5 cancel each other out better, and the electrochemical apparatus 100 has better electromagnetic characteristics.

When viewed in the third direction Z, a connecting line between a geometric center of the fifth connecting zone 61 and a geometric center of the third connecting zone 42 is denoted as W3, a connecting line between the geometric center of the second connecting zone 41 and the geometric center of the third connecting zone 42 is denoted as W4, and an included angle between the connecting line W3 and the connecting line W4 is denoted as $\beta$.

In this application, $\beta$ is the included angle between a ray passing through the geometric center of the fifth connecting zone 61 and a ray passing through the geometric center of the second connecting zone 41 when viewed in the third direction Z, with the geometric center of the third connecting zone 42 as an endpoint.

In an embodiment, $0° \leq \beta \leq 45°$. When the electrochemical apparatus 100 is in a charging/discharging state, when viewed in the third direction Z, the currents tend to flow in opposite directions on the second tab 4 and the second connecting member 6, and the magnetic field generated by the second tab 4 and the magnetic field generated by the second connecting member 6 can at least partially cancel each other out, so that the magnetic field generated on the side of the bottom wall 13 of the electrochemical apparatus 100 is weakened, thereby reducing the impact of the magnetic field generated by the electrochemical apparatus 100 on the electric device. As compared with $\beta > 45°$, when $\beta \leq 45°$, the magnetic field and inductance generated by the second tab 4 and the magnetic field and inductance generated by the second connecting member 6 cancel each other out better, and the electrochemical apparatus 100 has better electromagnetic characteristics.

When viewed in the third direction Z, a length of a line segment between the geometric center of the first connecting zone 31 and the geometric center of the first electrode 111 is denoted as L1, and a length of a line segment between the geometric center of the fourth connecting zone 51 and the geometric center of the first electrode 111 is denoted as L3.

Optionally, $0.5 \leq L1/L3 \leq 2$. As compared with other values of L1/L3, when $0.5 \leq L1/L3 \leq 2$, the magnetic field generated by the first tab 3 and the magnetic field generated by the first connecting member 5 cancel each other out better, and the magnetic field generated by the electrochemical apparatus 100 has smaller impact on the electric device. Optionally, $0.9 \leq L1/L3 \leq 1.1$.

When viewed in the third direction Z, a length of a line segment between the geometric center of the second connecting zone 41 and the geometric center of the third connecting zone 42 is denoted as L2, and a length of a line segment between the geometric center of the fifth connecting zone 61 and the geometric center of the third connecting zone 42 is denoted as L4.

In an embodiment, $0.5 \leq L2/L4 \leq 2$. As compared with other values of L2/L4, when $0.5 \leq L2/L4 \leq 2$, the magnetic field generated by the second tab 4 and the magnetic field generated by the second connecting member 6 cancel each other out better, and the magnetic field generated by the electrochemical apparatus 100 has smaller impact on the electric device. Optionally, $0.9 \leq L2/L4 \leq 1.1$.

In an embodiment, an included angle between the connecting line W2 and the connecting line W4 is denoted as $\alpha$, and optionally, $0° \leq \alpha \leq 60°$. When the electrochemical apparatus 100 is in a charging/discharging state, the magnetic field generated by the first tab 3 and the magnetic field generated by the second tab 4 can at least partially cancel each other out, so that the magnetic field generated by the entire electrochemical apparatus 100 is weakened, thereby reducing the impact of the magnetic field generated by the electrochemical apparatus 100 on the electric device. In this application, the included angle $\alpha$ is an included angle between a ray from an intersection point between the connecting line W2 and the connecting line W4 or their extension lines to the geometric center of the first connecting zone 31 and a ray from the intersection point to the geometric center of the second connecting zone 41.

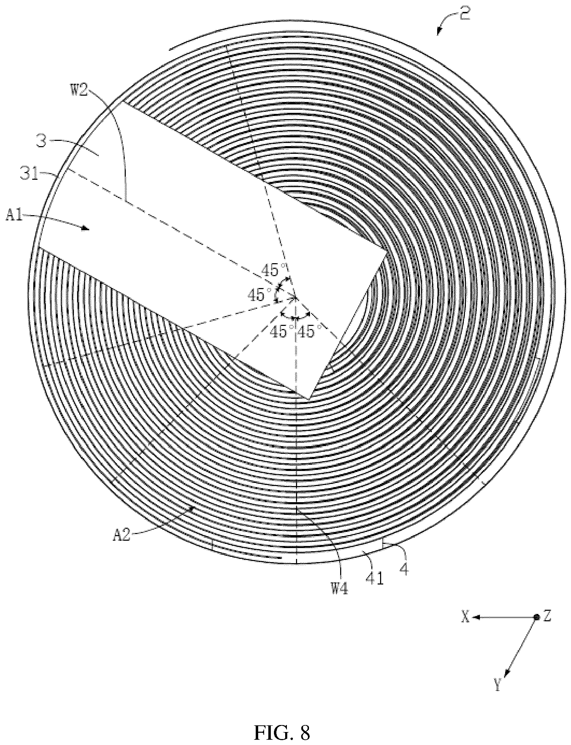

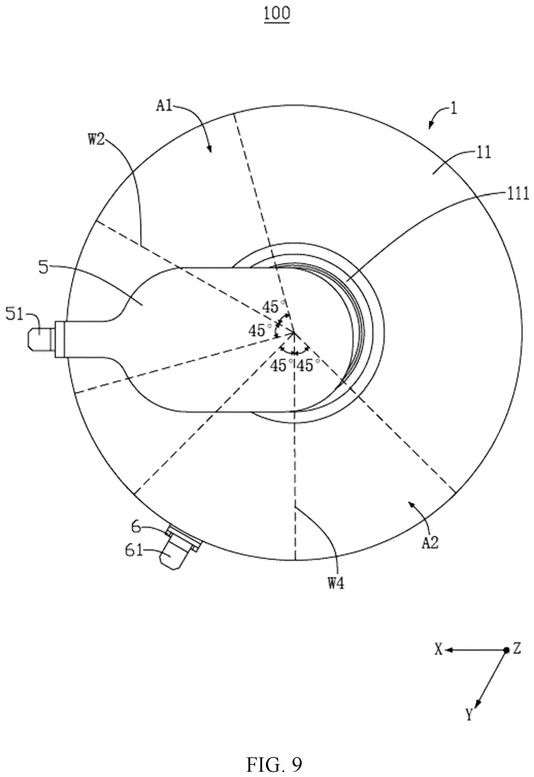

As shown in FIG. 8 and FIG. 9, when viewed in the third direction Z, with the connecting line W2 as a first reference line, the geometric center of the first electrode 111 as the center of a circle, and the line segment length L1 as a radius, a $\pm 45°$ sector region on both sides of the first reference line is denoted as a first region A1, an area of the first connecting member 5 is denoted as S1, and an area of an overlap between the first connecting member 5 and the first region A1 is denoted as S2.

Optionally, $S2/S1 \geq 50\%$. As compared with $S2/S1 < 50\%$, when $S2/S1 \geq 50\%$, the magnetic field generated by the first tab 3 and the magnetic field generated by the first connecting member 5 cancel each other out better, and the magnetic field generated on the side of the top wall 11 of the electrochemical apparatus 100 has smaller impact on the electric device.

Optionally, $S2/S1 \geq 70\%$. When $S2/S1 \geq 70\%$, the magnetic field generated by the first tab 3 and the magnetic field generated by the first connecting member 5 cancel each other out better, and the difference in magnetic field at various positions on the side of the top wall 11 is small.

In an embodiment, when viewed in the third direction Z, with the connecting line W4 as a second reference line, the geometric center of the third connecting zone 42 as the center of a circle, and the line segment length L2 as a radius, a $\pm 45°$ sector region on both sides of the second reference line is denoted as a second region A2, an area of the second connecting member 6 is denoted as S3, and an area of an overlap between the second connecting member 6 and the second region A2 is denoted as S4.

Optionally, $S4/S3 \geq 50\%$. As compared with $S4/S3 < 50\%$, when $S4/S3 \geq 50\%$, the magnetic field generated by the second tab 4 and the magnetic field generated by the second connecting member 6 cancel each other out better, and the magnetic field generated on the side of the bottom wall 13 of the electrochemical apparatus 100 has smaller impact on the electric device.

Further, S4/S3 ≥ 70%. When S4/S3 ≥ 70%, the magnetic field generated by the second tab 4 and the magnetic field generated by the second connecting member 6 cancel each other out better, and the difference in magnetic field at various positions on the side of the bottom wall 13 is small.

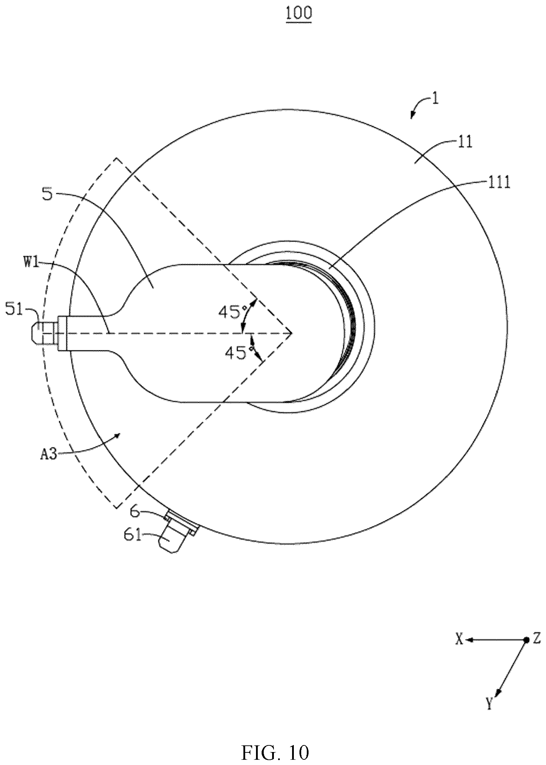

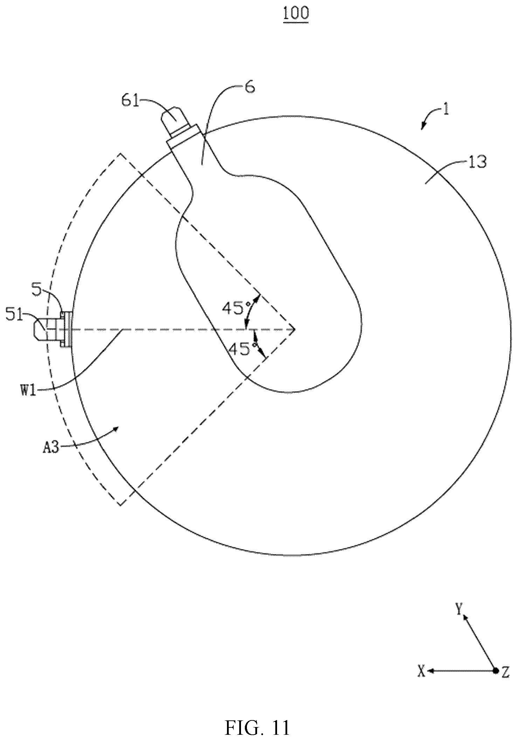

As shown in FIG. 10 and FIG. 11, in an embodiment, when viewed in the third direction Z, with the connecting line W1 as a third reference line, the geometric center of the first electrode 111 as the center of a circle, and the line segment length L3 as a radius, a ±45° sector region on both sides of the third reference line is denoted as a third region A3, and an area of an overlap between the second connecting member 6 and the third region A3 is denoted as S5.

In an embodiment, S5/S3 ≥ 50%. When the electrochemical apparatus 100 is in a charging/discharging state, the magnetic field generated by the first connecting member 5 and the magnetic field generated by the second connecting member 6 can at least partially cancel each other out, so that the magnetic field generated by the entire electrochemical apparatus 100 is weakened, thereby reducing the impact of the magnetic field generated by the electrochemical apparatus 100 on the electric device.

Optionally, S5/S3 ≥ 85%. When S5/S3 ≥ 85%, the magnetic field generated by the first connecting member 5 and the magnetic field generated by the second connecting member 6 cancel each other out better, and the difference in magnetic field at various positions on the sides of the top wall 11 and bottom wall 13 of the electrochemical apparatus 100 is small.

To verify the weakening effect of this application on the magnetic field generated by the electrochemical apparatus 100, the following comparative tests were conducted.

Test 1

With the first tab set as a positive electrode tab, the second tab set as a negative electrode tab, the included angle β set to 0°, the value of S4/S3 set to 100%, the included angle α set to 0°, the value of D1/D2 set to 0.9418, and the values of S2/S1 and the included angle θ changed, a magnetic flux density B on the side of the top wall 11 was recorded.

In this application, the magnetic flux density, also known as the magnetic induction intensity, can be used to indicate the strength of a magnetic field. A larger value of the magnetic flux density indicates a stronger magnetic field and a smaller weakening effect on the magnetic field generated by the electrochemical apparatus 100, while a smaller value of the magnetic flux density indicates a weaker magnetic field and a greater weakening effect on the magnetic field generated by the electrochemical apparatus 100.

**Table 1 Comparison of records for different S2/S1**

| S2/S1 (%) | Included angle θ (°) | S4/S3 (%) | Included angle β (°) | Included angle α (°) | D1/D2 | Magnetic flux density B/10⁻⁶ (T) |
|---|---|---|---|---|---|---|
| 100 | 0 | 100 | 0 | 0 | 0.9418 | 4.56 |
| 100 | 5 | 100 | 0 | 0 | 0.9418 | 4.75 |
| 100 | 10 | 100 | 0 | 0 | 0.9418 | 4.96 |
| 100 | 15 | 100 | 0 | 0 | 0.9418 | 5.19 |
| 100 | 20 | 100 | 0 | 0 | 0.9418 | 5.43 |
| 100 | 25 | 100 | 0 | 0 | 0.9418 | 5.68 |
| 95 | 30 | 100 | 0 | 0 | 0.9418 | 5.93 |
| 85 | 35 | 100 | 0 | 0 | 0.9418 | 6.18 |
| 70 | 40 | 100 | 0 | 0 | 0.9418 | 6.42 |
| 60 | 42 | 100 | 0 | 0 | 0.9418 | 6.51 |
| 55 | 45 | 100 | 0 | 0 | 0.9418 | 6.65 |
| 50 | 47 | 100 | 0 | 0 | 0.9418 | 6.73 |
| 45 | 49 | 100 | 0 | 0 | 0.9418 | 6.82 |
| 40 | 51 | 100 | 0 | 0 | 0.9418 | 6.90 |
| 35 | 52 | 100 | 0 | 0 | 0.9418 | 6.94 |
| 30 | 53 | 100 | 0 | 0 | 0.9418 | 6.97 |

(continued)

| S2/S1 (%) | Included angle θ (°) | S4/S3 (%) | Included angle β (°) | Included angle α (°) | D1/D2 | Magnetic flux density B/10⁻⁶ (T) |
|---|---|---|---|---|---|---|
| 20 | 55 | 100 | 0 | 0 | 0.9418 | 7.05 |
| 10 | 60 | 100 | 0 | 0 | 0.9418 | 7.21 |
| 0 | 70 | 100 | 0 | 0 | 0.9418 | 7.47 |
| 0 | 80 | 100 | 0 | 0 | 0.9418 | 7.75 |
| 0 | 90 | 100 | 0 | 0 | 0.9418 | 8.21 |
| 0 | 100 | 100 | 0 | 0 | 0.9418 | 8.92 |
| 0 | 110 | 100 | 0 | 0 | 0.9418 | 9.70 |
| 0 | 120 | 100 | 0 | 0 | 0.9418 | 10.30 |
| 0 | 130 | 100 | 0 | 0 | 0.9418 | 10.53 |
| 0 | 140 | 100 | 0 | 0 | 0.9418 | 10.44 |
| 0 | 150 | 100 | 0 | 0 | 0.9418 | 10.20 |
| 0 | 160 | 100 | 0 | 0 | 0.9418 | 9.93 |
| 0 | 170 | 100 | 0 | 0 | 0.9418 | 9.76 |
| 0 | 180 | 100 | 0 | 0 | 0.9418 | 9.83 |

It can be learned from Table 1 that when S2/S1 is 100% and θ is 0°, the magnetic flux density B is about 4.56 × 10⁻⁶ T; when S2/S1 is 50% and θ is 47°, the magnetic flux density B is about 6.73 × 10⁻⁶ T (about 1.48 times that when S2/S1 is 100% and θ is 0°); when S2/S1 is 0% and θ is 70°, the magnetic flux density B is about 7.47 × 10⁻⁶ T (about 1.64 times that when S2/S1 is 100% and θ is 0°); and when S2/S1 is 0% and θ is 180°, the magnetic flux density B is about 9.83 × 10⁻⁶ T (about 2.16 times that when S2/S1 is 100% and θ is 0°).

When S2/S1 is 100%, viewed in the third direction Z, a projection of the first connecting member 5 overlaps a projection of the first region A1, and the electrochemical apparatus 100 has good electromagnetic characteristics. Moreover, as the value of the included angle θ decreases, the electromagnetic characteristics of the electrochemical apparatus 100 are gradually optimized.

Test 2

With the first tab set as a positive electrode tab, the second tab set as a negative electrode tab, the included angle θ set to 0°, the value of S2/S1 set to 100%, the included angle β set to 0°, and the values of S5/S3, the included angles α, and D1/D2 changed, the magnetic flux density B1 on the side of the top wall 11 and the magnetic flux density B2 on the side of the bottom wall 13 were recorded.

**Table 2 Comparison of records for different S5/S3**

| S5/S3 (%) | Included angle α (°) | D1/D2 | Magnetic flux density B1/10⁻⁶ (T) | Magnetic flux density B2/10⁻⁶ (T) |
|---|---|---|---|---|
| 100 | 0 | 0.9418 | 4.560 | 3.390 |
| 100 | 5 | 0.9406 | 4.590 | 3.445 |
| 100 | 10 | 0.9394 | 4.620 | 3.500 |
| 100 | 15 | 0.9382 | 4.650 | 3.555 |
| 100 | 20 | 0.9370 | 4.680 | 3.610 |
| 100 | 25 | 0.9358 | 4.710 | 3.665 |
| 95 | 30 | 0.9345 | 4.740 | 3.720 |
| 85 | 35 | 0.9333 | 4.915 | 3.852 |

(continued)

| S5/S3 (%) | Included angle $\alpha$ (°) | D1/D2 | Magnetic flux density B1/$10^{-6}$ (T) | Magnetic flux density B2/$10^{-6}$ (T) |
|---|---|---|---|---|
| 70 | 40 | 0.9321 | 5.090 | 3.983 |
| 55 | 45 | 0.9309 | 5.265 | 4.115 |
| 40 | 50 | 0.9297 | 5.440 | 4.247 |
| 20 | 55 | 0.9285 | 5.615 | 4.378 |
| 10 | 60 | 0.9273 | 5.790 | 4.510 |
| 0 | 70 | 0.9249 | 5.840 | 4.623 |
| 0 | 80 | 0.9226 | 5.890 | 4.737 |
| 0 | 90 | 0.9202 | 5.940 | 4.850 |

It can be learned from Table 2 that when S5/S3 is 100% and $\alpha$ is 0°, the magnetic flux density B1 is about $4.560 \times 10^{-6}$ T and the magnetic flux density B2 is about $3.390 \times 10^{-6}$ T; when S5/S3 is 55% and $\alpha$ is 45°, the magnetic flux density B1 is about $5.265 \times 10^{-6}$ T (about 1.15 times that when S5/S3 is 100% and $\alpha$ is 0°) and the magnetic flux density B2 is about $4.115 \times 10^{-6}$ T (about 1.21 times that when S5/S3 is 100% and $\alpha$ is 0°); and when S5/S3 is 0% and $\alpha$ is 90°, the magnetic flux density B1 is about $5.940 \times 10^{-6}$ T (about 1.30 times that when S5/S3 is 100% and $\alpha$ is 0°) and the magnetic flux density B2 is about $4.850 \times 10^{-6}$ T (about 1.43 times that when S5/S3 is 100% and $\alpha$ is 0°).

When S5/S3 is 100%, viewed in the third direction Z, a projection of the second connecting member 6 overlaps a projection of the third region A3, and the electrochemical apparatus 100 has good electromagnetic characteristics. Moreover, as the value of $\alpha$ decreases, the electromagnetic characteristics of the electrochemical apparatus 100 are gradually optimized, and the magnetic flux densities on the sides of the top wall 11 and bottom wall 13 of the electrochemical apparatus 100 are further significantly decreased.

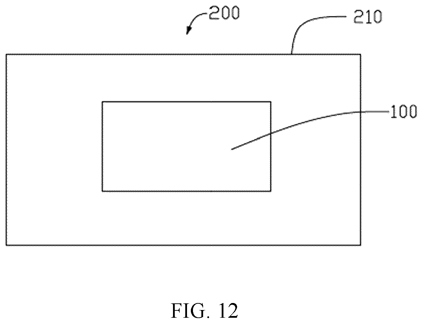

As shown in FIG. 12, an embodiment of this application further provides an electric device 200. The electric device 200 includes a device body 210 and the electrochemical apparatus 100 of any one of the foregoing embodiments, and the electrochemical apparatus 100 is disposed on the device body 210. The electrochemical apparatus 100 can weaken the magnetic field generated by itself, has good electromagnetic characteristics, and reduces the impact of its own magnetic field on the electric device 200.

In addition, persons skilled in the art can also make other changes within the spirit of this application. Certainly, these changes made according to the spirit of this application shall fall within the scope of this application.

**Claims**

1.   An electrochemical apparatus, comprising:

a housing, wherein the housing comprises a top wall, a side wall, and a bottom wall, the top wall being provided with a first electrode; and
an electrode assembly accommodated in the housing, the electrode assembly comprising a first electrode plate and a second electrode plate;
wherein at least one of the following conditions (i) or (ii) is satisfied:

(i) the electrochemical apparatus further comprises:

a first tab connected to the first electrode plate and the first electrode, the first tab comprising a first connecting zone connected to the first electrode plate; and
a first connecting member disposed outside the housing, the first connecting member being connected to the first electrode; wherein
when viewed in a direction perpendicular to the top wall, a connecting line between a geometric center of the first connecting zone and a geometric center of the first electrode is a first reference line, and with the geometric center of the first electrode as the center of a circle and a length L1 of a line segment between the geometric center of the first connecting zone and the geometric center of the first electrode as a radius, a $\pm 45°$ sector region on both sides of the first reference line is denoted as a first region, an area of the first connecting member is denoted as S1, and an area of an overlap between the first connecting member and the first region is denoted as S2, satisfying:

$$S2/S1 \geq 50\%;$$

or

(ii) the electrochemical apparatus further comprises:

a second tab connected to the second electrode plate and the housing, the second tab comprising a second connecting zone connected to the second electrode plate and a third connecting zone connected to the housing; and
a second connecting member disposed outside the housing, the second connecting member being connected to the housing; wherein
when viewed in a direction perpendicular to the bottom wall, a connecting line between a geometric center of the second connecting zone and a geometric center of the third connecting zone is a second reference line, and with the geometric center of the third connecting zone as the center of a circle and a length L2 of a line segment between the geometric center of the second connecting zone and the geometric center of the third connecting zone as a radius, a $\pm 45°$ sector region on both sides of the second reference line is denoted as a second region, an area of the second connecting member is denoted as S3, and an area of an overlap between the second connecting member and the second region is denoted as S4, satisfying: $S4/S3 \geq 50\%$.

2. The electrochemical apparatus according to claim 1, wherein at least one of the following conditions (iii) or (iv) is satisfied:

$$(iii) \ S2/S1 \geq 70\%;$$

or

$$(iv) \ S4/S3 \geq 70\%.$$

3. The electrochemical apparatus according to claim 1, wherein at least one of the following conditions (v) or (vi) is satisfied:

(v) a fourth connecting zone is provided at an end portion of the first connecting member away from the first electrode, wherein
when viewed in a direction perpendicular to the top wall, an included angle between a connecting line between a geometric center of the fourth connecting zone and the geometric center of the first electrode and a connecting line between the geometric center of the first connecting zone and the geometric center of the first electrode is denoted as $\theta$, satisfying: $0° \leq \theta \leq 45°$; or
(vi) a fifth connecting zone is provided at an end portion of the second connecting member away from the third connecting zone, wherein
when viewed in a direction perpendicular to the bottom wall, an included angle between a connecting line between a geometric center of the fifth connecting zone and the geometric center of the third connecting zone and a connecting line between the geometric center of the second connecting zone and the geometric center of the third connecting zone is denoted as $\beta$, satisfying: $0° \leq \beta \leq 45°$.

4. The electrochemical apparatus according to claim 1, wherein

a fourth connecting zone is provided at an end portion of the first connecting member away from the first electrode, wherein
when viewed in a direction perpendicular to the top wall, a connecting line between a geometric center of the fourth connecting zone and the geometric center of the first electrode is a third reference line, and with the geometric center of the first electrode as the center of a circle and a length L3 of a line segment between the geometric center of the fourth connecting zone and the geometric center of the first electrode as a radius, a

$\pm 45°$ sector region on both sides of the third reference line is denoted as a third region, and an area of an overlap between the second connecting member and the third region is denoted as S5, satisfying: $S5/S3 \geq 50\%$.

5. The electrochemical apparatus according to claim 4, wherein a ratio of the area S5 to the area S3 satisfies: $S5/S3 \geq 85\%$.

6. The electrochemical apparatus according to claim 4, wherein when viewed in the direction perpendicular to the top wall, an included angle between the first reference line and the second reference line is denoted as $\alpha$, satisfying: $0° \leq \alpha \leq 60°$.

7. The electrochemical apparatus according to claim 1, wherein

   the electrode assembly is a wound structure;
   the first electrode plate comprises a first active material layer, the first active material layer comprises a first end portion, and the first end portion is disposed at a winding start end of the wound structure;
   the second electrode plate comprises a second active material layer, the second active material layer comprises a second end portion, and the second end portion is disposed at the winding start end of the wound structure; and
   along a length direction of the first electrode plate, a distance between the geometric center of the first connecting zone and the first end portion is denoted as D 1; and along a length direction of the second electrode plate, a distance between the geometric center of the second connecting zone and the second end portion is denoted as D2, satisfying: $0.5 \leq D1/D2 \leq 2$.

8. The electrochemical apparatus according to claim 1, wherein at least one of the following conditions (a) or (b) is satisfied:

   (a) a fourth connecting zone is provided at an end portion of the first connecting member away from the first electrode, wherein when viewed in a direction perpendicular to the top wall, a length of a line segment between a geometric center of the fourth connecting zone and the geometric center of the first electrode is denoted as L3, satisfying: $0.5 \leq L1/L3 \leq 2$; or
   (b) a fifth connecting zone is provided at an end portion of the second connecting member away from the third connecting zone, wherein when viewed in a direction perpendicular to the bottom wall, a length of a line segment between a geometric center of the fifth connecting zone and the geometric center of the third connecting zone is denoted as L4, satisfying: $0.5 \leq L2/L4 \leq 2$.

9. The electrochemical apparatus according to claim 1, wherein at least one of the following conditions (1) to (4) is satisfied:

   (1) the first tab and the second tab are located on opposite sides of the electrode assembly;
   (2) the top wall has a first surface and a second surface opposite each other, the top wall is provided with a through hole penetrating through the first surface and the second surface, and the first electrode is disposed in the through hole;
   (3) an insulator is provided between the top wall and the first electrode; or
   (4) the housing comprises a metal material.

10. An electric device, comprising the electrochemical apparatus according to any one of claims 1 to 9.

FIG. 1

FIG. 2

FIG. 3

FIG. 4

FIG. 5

FIG. 6

FIG. 7

FIG. 8

100

FIG. 9

FIG. 10

FIG. 11

FIG. 12

## INTERNATIONAL SEARCH REPORT

| International application No. |
| --- |
| **PCT/CN2021/127691** |

| A. | CLASSIFICATION OF SUBJECT MATTER |
| --- | --- |

H01M 50/533(2021.01)i; H05K 9/00(2006.01)i

According to International Patent Classification (IPC) or to both national classification and IPC

| B. | FIELDS SEARCHED |
| --- | --- |

Minimum documentation searched (classification system followed by classification symbols)

H01M; H05K

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 宁德, 苏士伟, 电池, 扣式, 纽扣, 消, 减, 弱, 磁, 极耳, 端子, 连接件, 引出端, 导电片, 连接片, 转接片, 电极, 重叠, 重合, 面积, 圆心, 半径, 扇形, cell?, batter+, button, coin, magnetic, weak+, interfer+, tab?, terminal, pole, connect+, lead+, electrode?, overlap+, area, centre, radius

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 214124061 U (BYD CO., LTD.) 03 September 2021 (2021-09-03) description, paragraphs [0078]-[0114], and figures 1-12 | 1-10 |
| A | CN 110870129 A (NITTO DENKO CORP.) 06 March 2020 (2020-03-06) entire document | 1-10 |
| A | JP 2008123875 A (NEC TOKIN CORP.) 29 May 2008 (2008-05-29) entire document | 1-10 |
| A | JP 2006210167 A (HITACHI MAXELL) 10 August 2006 (2006-08-10) entire document | 1-10 |
| A | KR 20090022283 A (SON, J. H.) 04 March 2009 (2009-03-04) entire document | 1-10 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 May 2022** | **26 May 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/127691**

| Patent document cited in search report | | | Publication date (day/month/year) | Patent family member(s) | | | Publication date (day/month/year) |
|---|---|---|---|---|---|---|---|
| CN | 214124061 | U | 03 September 2021 | None | | | |
| CN | 110870129 | A | 06 March 2020 | JP | 2019029224 | A | 21 February 2019 |
| | | | | WO | 2019026879 | A1 | 07 February 2019 |
| | | | | US | 2021152953 | A1 | 20 May 2021 |
| | | | | JP | 6979297 | B2 | 08 December 2021 |
| JP | 2008123875 | A | 29 May 2008 | None | | | |
| JP | 2006210167 | A | 10 August 2006 | None | | | |
| KR | 20090022283 | A | 04 March 2009 | KR | 100900570 | B1 | 02 June 2009 |

Form PCT/ISA/210 (patent family annex) (January 2015)